# EUROPEAN PATENT SPECIFICATION

(11) **EP 4 478 506 B1**
(45) Date of publication and mention of the grant of the patent: **23.09.2026**
(21) Application number: 24173976.2
(22) Date of filing: 03.05.2024
(51) Int. Cl.: H01M 50/231, H01M 50/24, H01M 50/244

(54) **WATERTIGHT BATTERY LOWER CASE AND MANUFACTURING METHOD THEREOF**
WASSERDICHTES BATTERIEUNTERGEHÄUSE UND HERSTELLUNGSVERFAHREN DAFÜR
BOÎTIER INFÉRIEUR DE BATTERIE ÉTANCHE À L'EAU ET SON PROCÉDÉ DE FABRICATION

(30) Priority: 12.06.2023 KR 20230074703
(43) Date of publication of application: 18.12.2024
(73) Proprietor: Hyundai Mobis Co., Ltd., Gangnam-gu Seoul 06141 (KR)
(72) Inventor: PARK, Ho Jin, 16865 Yongin-si, Gyeonggi-do (KR)
(74) Representative: Frenkel, Matthias Alexander

(56) References cited:
- EP-A1- 3 855 525
- EP-A1- 4 145 604
- US-A1- 2023 006 297

## Description

### TECHNICAL FIELD

The following disclosure relates to a watertight battery case.

### BACKGROUND

A conventional watertight battery pack may watertight a battery by attaching a bracket and a reinforcing material for stronger rigidity of a battery case respectively to the inside and outside of the case. Here, it is most important that the bracket and the reinforcing material are attached to the same point. Therefore, the bracket and the reinforcing material may be triple welded all together while having the battery case interposed therebetween.

However, if a micropore occurs in a triple welded area, the battery case may fail to meet an IPX7 standard (i.e., no moisture inflow when submerged at 1 m for 30 minutes) for a watertight battery, and the case may be defective. Due to a feature of a welding process, based on a pressure condition, a welding current condition, or a welding speed condition, the longer the joining depth, the higher the occurrence possibilities of the micropore or a pore. In addition, in a case of spot welding, it may be difficult to achieve uniform quality welding based on the wear of a welding tip or a welding environment. In addition, it is virtually impossible to inspect later whether the pore occurs at the triple welded area in a current high-voltage battery steel case.

Accordingly, a plan to exclude the spot welding and use a structural adhesive has also been proposed.

US 2023/006297 A1 discloses the preamble of claim 1, in particular a battery housing which is equipped with lightweight collision protection which can be produced inexpensively and which also only requires a small amount of installation space. The floor of the housing has a structural sheet connected between the upper and lower sheets. The structural sheet is profiled in a meandering manner. The structural sheets includes a first contact section connected to the lower sheet, namely by means of an adhesive and a second contact section is connected to the upper sheet by a soldered connection.

### SUMMARY

An embodiment of the present disclosure is directed to providing a watertight battery lower case according to claim 1 with higher productivity due to a shorter adhesive curing time and a lower welding defect rate by selectively applying a structural adhesive to some joint layers of the watertight battery case and welding the other joint layers to each other, and a manufacturing method thereof according to claim 8.

According to the presnet invention, a watertight battery lower case and a manufacturing method thereof are provided in the independent claims. In one general aspect, a watertight battery lower case includes: a main case part applied to a lower part of a battery module to protect the battery module, and having a flat shape; an internal bracket part disposed between one surface of the main case part and the battery module to support their joining; a sub-assembly part having one surface in contact with and stacked on another surface of the main case part; and a fixing part joining and fixing the main case part, the internal bracket part, and the sub-assembly part to one another, wherein the fixing part simultaneously includes a welded joint joined by welding and an adhesive joint joined by an adhesive, and the main case part, the internal bracket part, and the sub-assembly part are joined to one another by sharing a certain joint region together.

The main case part and the internal bracket part each include welding holes at corresponding positions, the welded joint is formed by simultaneously passing through the main case part and the internal bracket part via the welding holes, the adhesive joint is formed by adhesively joining to the main case part and the sub-assembly part by coating the adhesive therebetween, and the sub-assembly part has an adhesive storage part engraved therein and accommodating the adhesive inside.

The adhesive storage part may include a first adhesive storage groove which is a step recessed to a certain depth in a predetermined adhesive storage region including a region overlapping a position of the welding hole.

The adhesive storage part may include a second adhesive storage groove having recesses that are formed in a regular interval in a predetermined adhesive storage region including a region overlapping a position of the welding hole.

When a formation direction of the welding hole and contact surfaces of the main case part and the internal bracket part are neither perpendicular nor parallel to each other and have a predetermined incline therebetween, the adhesive storage part may include a third adhesive storage groove etched stepwise in a predetermined adhesive storage region including a region overlapping a position of the welding hole.

When the density of the welded joint is less than a predetermined reference value, the adhesive joint may be coated by the adhesive with a greater amount than a maximum amount of the adhesive accommodated in the adhesive storage part including a region overlapping a position of the welding hole.

The sub-assembly part may further include a coating part including a coating material on an outer surface of the sub-assembly part.

In another general aspect, a manufacturing method of a watertight battery lower case in which an internal bracket part is disposed on one surface of a main case part, and a sub-assembly part is disposed on another surface of the main case part, includes: a step (a) of welding the main case part and the internal bracket part to each other; a step (b) of joining the main case part and the sub-assembly part to each other; and a step (c) of pressing the main case part, the internal bracket part, and the sub-assembly part together, wherein the main case part, the internal bracket part, and the sub-assembly part are joined to one another by sharing a certain joint region together.

The step (b) includes forming an adhesive joint by coating an adhesive between the main case part and the sub-assembly part.

The step (b) may include a step (b1) of inspecting the density of a welded joint between the main case part and the internal bracket part, and the step (b) may further include a step (b2) of coating the adhesive with a greater amount than a maximum amount of the adhesive accommodated in an adhesive storage part of the sub-assembly part when the density of the welded joint in the step (b1) is less than a predetermined reference value.

The method may further include, following the step (b), a step (e) of stacking a coating part including a coating material on an outer surface of the sub-assembly part.

### BRIEF DESCRIPTION OF THE DRAWINGS

FIG. 1 is a partial cross-sectional view of a watertight battery lower case of the present disclosure.
FIG. 2 is a partial cross-sectional view of a first embodiment of the watertight battery lower case of the present disclosure.
FIG. 3 is a partial cross-sectional view of a second embodiment of the watertight battery lower case of the present disclosure.
FIG. 4 is a partial cross-sectional view of a third embodiment of the watertight battery lower case of the present disclosure.
FIG. 5 is a partial cross-sectional view of a fourth embodiment of the watertight battery lower case of the present disclosure.
FIG. 6 is a partial cross-sectional view of the watertight battery lower case according to an example, which does not form part of the present invention but contains information useful for understanding the invention.
FIG. 7 is a partial cross-sectional view of a sixth embodiment of the watertight battery lower case of the present disclosure.
FIG. 8 is a flow chart showing a manufacturing method of a watertight battery lower case of the present disclosure.
FIG. 9 is a flow chart showing a detailed step of a step of joining a main case part and a sub-assembly part to each other.
FIG. 10 is a flow chart showing the manufacturing method of a watertight battery lower case according to an example, which does not form part of the present invention but contains information useful for understanding the invention.
FIG. 11 is a flow chart showing a second embodiment of the manufacturing method of a watertight battery lower case of the present disclosure.

### DETAILED DESCRIPTION OF EMBODIMENTS

Hereinafter, the embodiments of the present invention is described in more detail with reference to the accompanying drawings.

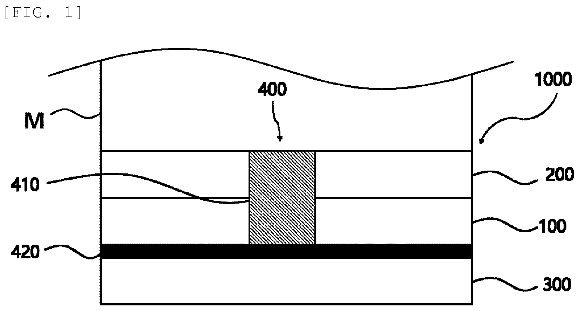

Hereinafter, a basic configuration of a watertight battery lower case 1000 of the present disclosure is described with reference to FIG. 1.

As shown in FIG. 1, the watertight battery lower case 1000 of the present disclosure includes a main case part 100. The main case part 100 is applied to a lower part of a battery module M to protect the battery module M, and has a flat shape. In addition, the watertight battery lower case 1000 of the present disclosure includes an internal bracket part 200 disposed between one surface of the main case part 100 and the battery module M to support their joining. In addition, the watertight battery lower case 1000 of the present disclosure includes a sub-assembly part 300 having one surface in contact with and stacked on the other surface of the main case part 100.

The watertight battery lower case 1000 of the present disclosure includes a fixing part 400 joining and fixing the main case part 100, the internal bracket part 200, and the sub-assembly part 300 described above to one another. The fixing part 400 simultaneously includes a welded joint 410 joined by welding and an adhesive joint 420 joined by an adhesive. Here, the adhesive for the adhesive joint 420 may be a structural adhesive such as epoxy. That is, the watertight battery lower case 1000 of the present disclosure uses both of welding and adhesive methods, thereby improving watertight performance and significantly lowering a defect rate by offsetting the pros and cons of each of the welding and adhesive methods. Here, the main case part 100, the internal bracket part 200, and the sub-assembly part 300 are joined to one another by sharing a certain joint region together due to other functional problems of a battery, and the fixing part 400 includes the welded joint 410 and the adhesive joint 420, thus maintaining watertightness of a triple joint area.

To describe the fixing part 400 in more detail, the main case part 100 and the internal bracket part 200 each include welding holes at corresponding positions. The welded joint 410 is welded by simultaneously passing through the main case part 100 and the internal bracket part 200 via the welding holes. The adhesive joint 420 is adhesively joined to the main case part 100 and the sub-assembly part 300 by coating the adhesive therebetween.

Here, in order to further increase an adhesive strength, the sub-assembly part 300 may have an adhesive storage part engraved in one surface thereof and accommodating the adhesive inside. It is thus possible to increase a coating amount of the adhesive, and increase the adhesive strength by increasing an adhesive depth. In addition, even when the adhesive is joined to the welded joint 410 (and a pore occurs), the over-coated adhesive may penetrate into the pore of the welded joint 410 to support the welded joint 410. Its detail is described below.

The main case part 100, the internal bracket part 200, and the sub-assembly part 300, which are joined to one another through the welded joint 410 and the adhesive joint 420 in this way, may be simultaneously pressed to increase the joining strength and watertightness of the case 1000. Here, the over-coated adhesive may compensate for a defect of the welded joint 410. Here, a pressing force may be provided in such a way that a pressure is applied by performing additional welding in a non-watertight region.

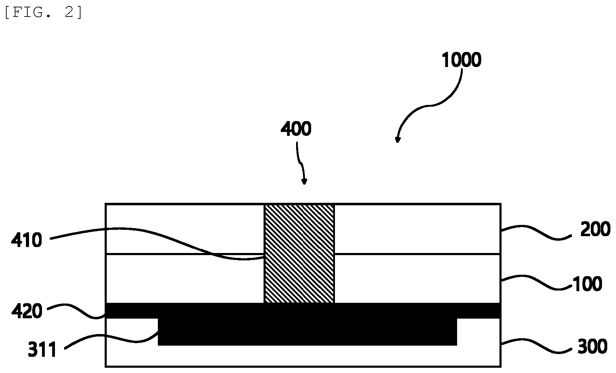

Hereinafter, a first embodiment of the watertight battery lower case 1000 of the present disclosure is described with reference to FIG. 2.

In the first embodiment of the watertight battery lower case 1000 of the present disclosure shown in FIG. 2, the adhesive storage part may include a first adhesive storage groove 311 which is a step recessed to a certain depth in a predetermined adhesive storage region including a region corresponding to the position of the welding hole. Here, the first adhesive storage groove 311 may be formed in the center of the sub-assembly part 300. The present disclosure may include the first adhesive storage groove 311, thus increasing the coating amount of the adhesive, and increasing the adhesive depth to thus increase the adhesive strength.

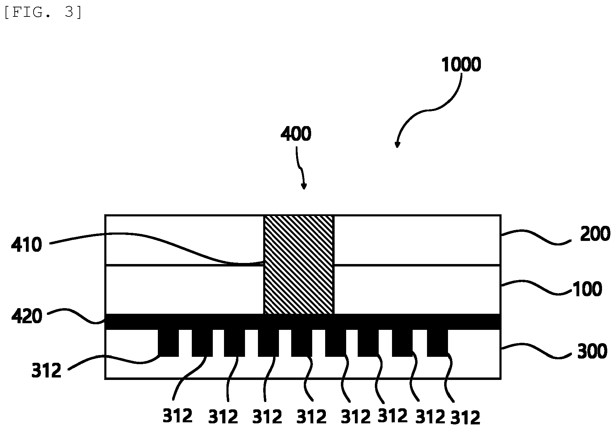

Hereinafter, a second embodiment of the watertight battery lower case 1000 of the present disclosure is described with reference to FIG. 3.

In the second embodiment of the watertight battery lower case 1000 of the present disclosure shown in FIG. 3, the adhesive storage part may include a second adhesive storage groove 312 having recesses that are formed in a regular interval in the predetermined adhesive storage region including the region corresponding to the position of the welding hole. Here, the second adhesive storage groove 312 may be formed in a straight line in an extension direction of the sub-assembly part 300, or may be formed in a checkerboard shape. As the second embodiment of the watertight battery lower case 1000 of the present disclosure is applied, the regions where the adhesive is stored may be separated from each other. Therefore, even if a crack or the defect occurs in any direction, the adhesive may be easily moved during the pressing to compensate for the defect.

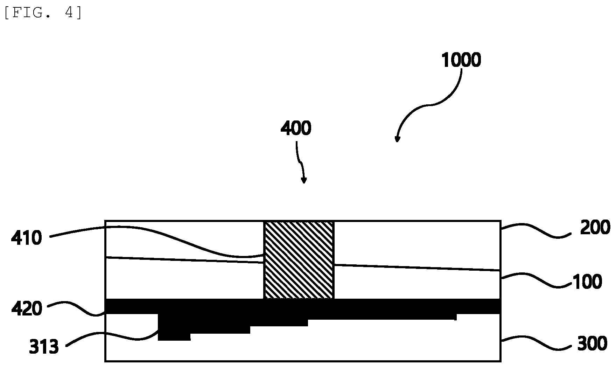

Hereinafter, a third embodiment of the watertight battery lower case 1000 of the present disclosure is described with reference to FIG. 4.

In the third embodiment of the watertight battery lower case 1000 of the present disclosure shown in FIG. 4, when a formation direction of the welding hole and contact surfaces of the main case part 100 and the internal bracket part 200 are neither perpendicular nor parallel to each other and have a predetermined incline therebetween, the adhesive storage part may include a third adhesive storage groove 313 etched stepwise in the predetermined adhesive storage region including the region corresponding to the position of the welding hole.

When the formation direction of the welding hole and the contact surfaces of the main case part 100 and the internal bracket part 200 are neither perpendicular nor parallel to each other and have the predetermined incline therebetween, there is a high possibility in which the defect occurs and a joining surface itself is inclined in a severe case. Here, as the third embodiment of the watertight battery lower case 1000 of the present disclosure is applied, the inclined joining surface may be supported by the adhesive, thus securing increased joining stability.

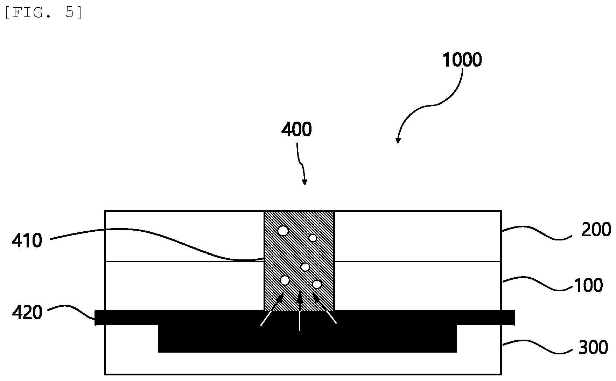

Hereinafter, a fourth embodiment of the watertight battery lower case 1000 of the present disclosure is described with reference to FIG. 5.

In the fourth embodiment of the watertight battery lower case 1000 of the present disclosure shown in FIG. 5, it is preferable for the adhesive joint 420 to be coated by the adhesive with a greater amount than the maximum amount of the adhesive accommodated in the adhesive storage part including the region corresponding to the position of the welding hole.

In more detail, during a process of the welded joint 410 in a battery pack production line, a welding pressure, a welding current, a welding speed, or the like may be monitored and compared with a predetermined reference value, thereby predicting in advance whether the welded joint 410 has lower density to cause the pore. When a prediction result indicates that the pore is highly likely to occur, the adhesive may be coated with the greater amount than the maximum amount of the adhesive accommodated in the adhesive storage part. Accordingly, the adhesive may be impregnated into the pore to maintain the joining strength of the case 1000 and increase its watertightness.

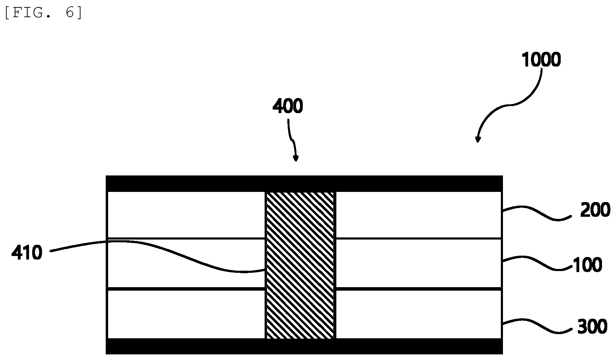

Hereinafter, a example of the watertight battery lower case 1000, which does not form part of the present invention but contains information useful for understanding the invention, is described with reference to FIG. 6.

In the example of the watertight battery lower case 1000 of the present disclosure shown in FIG. 6, the main case part 100 and the internal bracket part 200 each include the welding holes at the corresponding positions, and the welded joint 410 may be welded by simultaneously passing through the main case part 100, the internal bracket part 200, and the sub-assembly part 300 via the welding holes. Here, in order to compensate for the welded joint 410, the adhesive may be coated and cured between the internal bracket part 200 and the battery module M or coated on the other surface of the sub-assembly part 300. It is thus possible to offset the defect of the welded joint 410.

Furthermore, in the case where the welded joint 410 is predicted to have the lower density, and the pore is thus highly likely to occur, it is possible to maintain the joining strength and increase the watertightness in such a way that the adhesive with the greater amount than its reference amount impregnates into the pore.

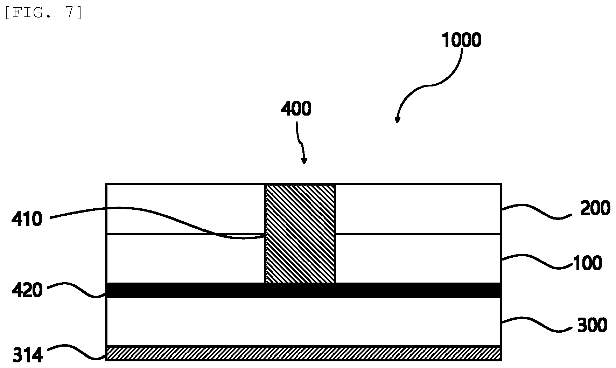

Hereinafter, a sixth embodiment of the watertight battery lower case 1000 of the present disclosure is described with reference to FIG. 7.

In the sixth embodiment of the watertight battery lower case 1000 of the present disclosure shown in FIG. 7, the sub-assembly part 300 may further include a coating part 314 including a coating material on the other surface. The coating part 314 may be a waterproof coating layer. The sub-assembly part 300 may include the coating part 314, thereby compensating for the watertightness of its surface.

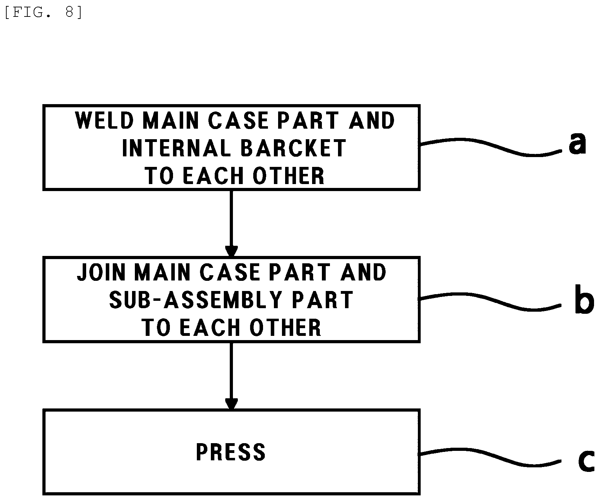

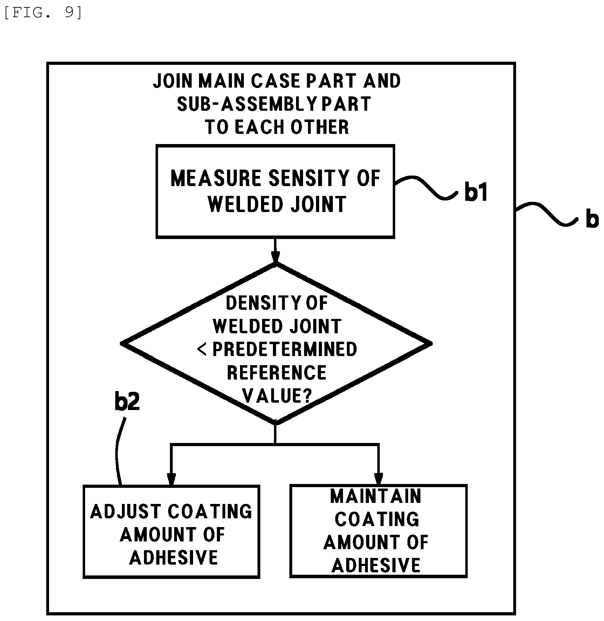

Hereinafter, a manufacturing method of a watertight battery lower case 1000 of the present disclosure is described in more detail with reference to FIGS. 8 and 9.

As shown in FIG. 8, the manufacturing method of the watertight battery lower case 1000 of the present disclosure may be a method of manufacturing the watertight battery lower case 1000 in which an internal bracket part 200 is disposed on one surface of a main case part 100, and a sub-assembly part 300 is disposed on the other surface of the main case part 100. The method may include: a step (a) of welding the main case part 100 and the internal bracket part 200 to each other; a step (b) of joining the main case part 100 and the sub-assembly part 300 to each other; and a step (c) of pressing the main case part 100, the internal bracket part 200, and the sub-assembly part 300 together. Here, in the step (c), a pressure may be applied by performing additional welding in a non-watertight region. Here, it is preferable that the main case part 100, the internal bracket part 200, and the sub-assembly part 300 are joined to one another by sharing a certain joint region together.

For example, as shown in FIG. 9, in the step (b), it is preferable that an adhesive for an adhesive joint 420 is coated between the main case part 100 and the sub-assembly part 300. In addition, the step (b) may include a step (b1) of inspecting the density of a welded joint 410, and it is preferable that the step (b) further includes a step (b2) of coating the adhesive with a greater amount than the maximum amount of the adhesive accommodated in an adhesive storage part of the sub-assembly part 300 when the density of the welded joint 410 in the step (b1) is less than a predetermined reference value.

In the step (b1), during a process of the welded joint 410 in a battery pack production line, a welding pressure, a welding current, a welding speed, or the like may be monitored and compared with the predetermined reference value, thereby predicting in advance whether the welded joint 410 has lower density to cause a pore. In the step (b1), the coating amount of the adhesive may not be adjusted when the density of the welded joint 410 meets the reference value.

Accordingly, even when the adhesive is joined to the welded joint 410 (and the pore occurs) while performing the step (c) later, the over-coated adhesive may penetrate into the pore of the welded joint 410 to support the welded joint 410. In addition, even if a defect exists in the sub-assembly part 300 or the main case part 100, the over-coated adhesive may penetrate into the corresponding area and compensate for the defect.

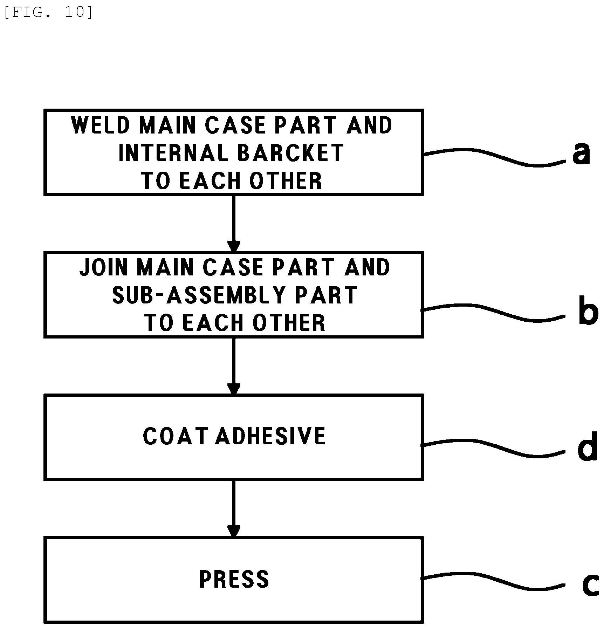

In an example, which does not form part of the present invention but contains information useful for understanding the invention, as shown in FIG. 10, in the step (b), the sub-assembly part 300 and the main case part 100 may be welded to each other by the welded joint 410. That is, the steps (a) and (b) may be performed together for the sub-assembly part 300, the main case part 100, and the internal bracket part 200 to be welded to one another by the welded joint 410. The method may then further include a step (d) following the step (b), the step (d) of coating the adhesive between the internal bracket part 200 and a battery module M, or coating the adhesive on the other surface of the sub-assembly part 300. The coated adhesive may be cured to protect the welded joint 410 even if the defect occurs in the welded joint 410.

Furthermore, in a case where the welded joint 410 is predicted to have the lower density, and the pore is thus highly likely to occur, it is possible to maintain the joining strength of the case 1000 and increase its watertightness in such a way that the adhesive with the greater amount than its reference amount impregnates into the pore.

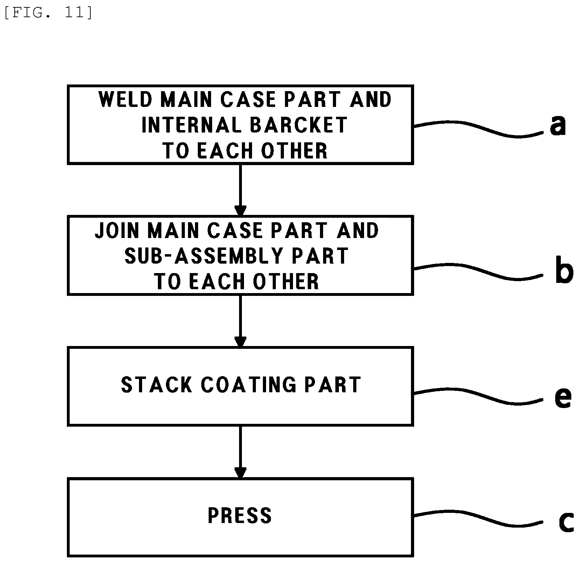

In addition, as shown in FIG. 11, the manufacturing method of the watertight battery lower case 1000 of the present disclosure may further include a step (e) of stacking a coating part 314 including a coating material on the other surface of the sub-assembly part 300. The step (e) may follow the step (b). The coating part 314 may be a waterproof coating layer. The case 1000 may include the coating part 314, thereby compensating for the watertightness of a surface of the sub-assembly part 300.

As set forth above, the present disclosure may provide the watertight battery lower case with the higher productivity due to the shorter adhesive curing time and the lower welding defect rate by selectively applying the structural adhesive to some joint layers of the watertight battery case and welding the other joint layers to each other, and the manufacturing method thereof.

The scope of the present invention is defined by the appended claims.

## Claims

1. A watertight battery lower case (1000) comprising:
a main case part (100) applied to a lower part of a battery module (M) to protect the battery module (M), and having a flat shape;
an internal bracket part (200) disposed between an upper surface of the main case part (100) and the battery module (M) to support their joining;
a sub-assembly part (300) having one surface in contact with and stacked on a lower surface of the main case part (100); and
a fixing part (400) joining and fixing the main case part (100), the internal bracket part (200), and the sub-assembly part (300) to one another,
wherein the fixing part (400) simultaneously includes a welded joint (410) joined by welding and an adhesive joint (420) joined by an adhesive,
**characterized in that**
the main case part (100), the internal bracket part (200), and the sub-assembly part (300) are joined to one another by sharing a certain joint region together,
wherein the main case part (100) and the internal bracket part (200) each include welding holes at corresponding positions,
the welded joint (410) is formed by simultaneously passing through the main case part (100) and the internal bracket part (200) via the welding holes, and
the adhesive joint (420) is formed by adhesively joining the main case part (100) to the sub-assembly part (300) by coating the adhesive therebetween overlapping a position of at least one of the welding holes.

2. The case (1000) of claim 1, wherein
the sub-assembly part (300) has an adhesive storage part engraved therein and accommodating the adhesive inside.

3. The case (1000) of claim 2, wherein the adhesive storage part includes a first adhesive storage groove (311) which is a step recessed to a certain depth in a predetermined adhesive storage region including a region overlapping a position of the welding holes.

4. The case (1000) of claim 2 or 3, wherein the adhesive storage part includes a second adhesive storage groove (312) having recesses that are formed in a regular interval in a predetermined adhesive storage region including a region overlapping a position of the welding holes.

5. The case (1000) of any one of claims 2 to 4, wherein when a formation direction of the welding hole and contact surfaces of the main case part (100) and the internal bracket part (200) are neither perpendicular nor parallel to each other and have a predetermined incline therebetween,
the adhesive storage part includes a third adhesive storage groove (313) etched stepwise in a predetermined adhesive storage region including a region overlapping a position of the welding holes.

6. The case (1000) of any one of claims 2 to 5, wherein when the density of the welded joint (410) is less than a predetermined reference value, the adhesive joint (420) is coated by the adhesive with a greater amount than a maximum amount of the adhesive accommodated in the adhesive storage part including a region overlapping a position of the welding holes.

7. The case of any one of claims 1 to 6, wherein the sub-assembly part (300) further includes a coating part (314) including a coating material on an outer surface of the sub-assembly part (300).

8. A manufacturing method of a watertight battery lower case in which an internal bracket part is disposed on an upper surface of a main case part, and a sub-assembly part is disposed on an lower surface of the main case part, the method comprising:
a step (a) of welding the main case part and the internal bracket part to each other by a welded joint;
a step (b) of joining the main case part and the sub-assembly part to each other by an adhesive joint; and
a step (c) of pressing the main case part, the internal bracket part, and the sub-assembly part together,
wherein the main case part, the internal bracket part, and the sub-assembly part are joined to one another by sharing a certain joint region together,
wherein the main case part and the internal bracket part each include welding holes at corresponding positions,
the welded joint is formed by simultaneously passing through the main case part and the internal bracket part via the welding holes,
the adhesive joint is formed by adhesively joining the main case part to the sub-assembly part by coating the adhesive therebetween overlapping a position of at least one the welding holes.

9. The method of claim 8, wherein the step (b) includes a step (b1) of inspecting the density of a welded joint between the main case part and the internal bracket part, and
the step (b) further includes a step (b2) of coating the adhesive with a greater amount than a maximum amount of the adhesive accommodated in an adhesive storage part of the sub-assembly part when the density of the welded joint in the step (b1) is less than a predetermined reference value.

10. The method of claim 8 or 9, further comprising, following the step (b), a step (e) of stacking a coating part including a coating material on an outer surface of the sub-assembly part.

## Patentansprüche

1. Wasserdichtes Batterieuntergehäuse (1000), umfassend:
ein Hauptgehäuseteil (100), das an einem unteren Teil eines Batteriemoduls (M) angebracht ist, um das Batteriemodul (M) zu schützen, und eine flache Form aufweist;
ein internes Halterungsteil (200), das zwischen einer Oberseite des Hauptgehäuseteils (100) und dem Batteriemodul (M) angeordnet ist, um deren Verbindung zu unterstützen;
ein Unterbaugruppenteil (300), dessen eine Fläche in Kontakt mit einer Unterseite des Hauptgehäuseteils (100) steht und auf dieser geschichtet ist; und
ein Befestigungsteil (400), das das Hauptgehäuseteil (100), das interne Halterungsteil (200) und das Unterbaugruppenteil (300) miteinander verbindet und befestigt,
wobei das Befestigungsteil (400) gleichzeitig eine durch Schweißen verbundene Schweißverbindung (410) und eine durch einen Klebstoff verbundene Klebeverbindung (420) umfasst,
**dadurch gekennzeichnet, dass**
das Hauptgehäuseteil (100), das interne Halterungsteil (200) und das Unterbaugruppenteil (300) miteinander verbunden sind, indem sie gemeinsam einen bestimmten Verbindungsbereich teilen,
wobei das Hauptgehäuseteil (100) und das interne Halterungsteil (200) jeweils Schweißlöcher an entsprechenden Positionen aufweisen,
die Schweißverbindung (410) dadurch gebildet ist, dass sie sich durch die Schweißlöcher hindurch gleichzeitig durch das Hauptgehäuseteil (100) und das interne Halterungsteil (200) erstreckt, und
die Klebeverbindung (420) dadurch gebildet ist, dass das Hauptgehäuseteil (100) mit dem Unterbaugruppenteil (300) klebend verbunden ist, indem der Klebstoff dazwischen so aufgetragen wird, dass er die Position mindestens eines der Schweißlöcher überlappt.

2. Gehäuse (1000) nach Anspruch 1, wobei
das Unterbaugruppenteil (300) ein darin eingraviertes Klebstoffspeicherteil aufweist, das den Klebstoff im Inneren aufnimmt.

3. Gehäuse (1000) nach Anspruch 2, wobei das Klebstoffspeicherteil eine erste Klebstoffspeichernut (311) umfasst, die eine in einem vorbestimmten Klebstoffspeicherbereich bis zu einer bestimmten Tiefe vertiefte Stufe ist, wobei der Klebstoffspeicherbereich einen Bereich umfasst, der eine Position der Schweißlöcher überlappt.

4. Gehäuse (1000) nach Anspruch 2 oder 3, wobei das Klebstoffspeicherteil eine zweite Klebstoffspeichernut (312) mit Vertiefungen umfasst, die in regelmäßigen Abständen in einem vorbestimmten Klebstoffspeicherbereich ausgebildet sind, der einen Bereich umfasst, der eine Position der Schweißlöcher überlappt.

5. Gehäuse (1000) nach einem der Ansprüche 2 bis 4, wobei, wenn eine Ausbildungsrichtung des Schweißlochs und Kontaktflächen des Hauptgehäuseteils (100) und des internen Halterungsteils (200) weder rechtwinklig noch parallel zueinander sind und eine vorbestimmte Neigung dazwischen aufweisen,
das Klebstoffspeicherteil eine dritte Klebstoffspeichernut (313) umfasst, die stufenweise in einem vorbestimmten Klebstoffspeicherbereich geätzt ist, der einen Bereich umfasst, der eine Position der Schweißlöcher überlappt.

6. Gehäuse (1000) nach einem der Ansprüche 2 bis 5, wobei, wenn die Dichte der Schweißverbindung (410) geringer als ein vorbestimmter Referenzwert ist, für die Klebeverbindung (420) Klebstoff in einer größeren Menge aufgetragen ist als eine maximale Menge des Klebstoffs, die in dem Klebstoffspeicherteil aufgenommen ist, das einen Bereich umfasst, der eine Position der Schweißlöcher überlappt.

7. Gehäuse nach einem der Ansprüche 1 bis 6, wobei das Unterbaugruppenteil (300) ferner ein Beschichtungsteil (314) umfasst, das ein Beschichtungsmaterial auf einer Außenfläche des Unterbaugruppenteils (300) umfasst.

8. Herstellungsverfahren für ein wasserdichtes Batterieuntergehäuse, bei dem ein internes Halterungsteil auf einer Oberseite eines Hauptgehäuseteils angeordnet ist und ein Unterbaugruppenteil auf einer Unterseite des Hauptgehäuseteils angeordnet ist, wobei das Verfahren umfasst:
einen Schritt (a) des Verschweißens des Hauptgehäuseteils und des internen Halterungsteils miteinander durch eine Schweißverbindung;
einen Schritt (b) des Verbindens des Hauptgehäuseteils und des Unterbaugruppenteils miteinander durch eine Klebeverbindung; und
einen Schritt (c) des Zusammenpressens des Hauptgehäuseteils, des internen Halterungsteils und des Unterbaugruppenteils,
wobei das Hauptgehäuseteil, das interne Halterungsteil und das Unterbaugruppenteil miteinander verbunden sind, indem sie gemeinsam einen bestimmten Verbindungsbereich teilen,
wobei das Hauptgehäuseteil und das interne Halterungsteil jeweils Schweißlöcher an entsprechenden Positionen aufweisen,
die Schweißverbindung dadurch gebildet ist, dass sie sich durch die Schweißlöcher hindurch gleichzeitig durch das Hauptgehäuseteil und das interne Halterungsteil erstreckt, und
die Klebeverbindung dadurch gebildet ist, dass das Hauptgehäuseteil mit dem Unterbaugruppenteil klebend verbunden ist, indem der Klebstoff dazwischen so aufgetragen wird, dass er die Position mindestens eines der Schweißlöcher überlappt.

9. Verfahren nach Anspruch 8, wobei der Schritt (b) einen Schritt (b1) des Prüfens der Dichte einer Schweißverbindung zwischen dem Hauptgehäuseteil und dem internen Halterungsteil umfasst und
der Schritt (b) ferner einen Schritt (b2) des Auftragens einer Klebstoffmenge umfasst, die größer ist als die maximale Menge des Klebstoffs, die in einem Klebstoffspeicherteil des Unterbaugruppenteils aufgenommen ist, wenn die Dichte der Schweißverbindung im Schritt (b1) geringer als ein vorbestimmter Referenzwert ist.

10. Verfahren nach Anspruch 8 oder 9, ferner umfassend, im Anschluss an den Schritt (b), einen Schritt (e) des Aufschichtens eines Beschichtungsteils, das ein Beschichtungsmaterial umfasst, auf eine Außenfläche des Unterbaugruppenteils.

## Revendications

1. Boîtier inférieur étanche à l'eau pour batterie (1000) comprenant:
une partie principale de boîtier (100) appliquée sur la partie inférieure d'un module de batterie (M) afin de protéger ce dernier, et se présentant sous une forme plate;
une partie de support interne (200) disposée entre la face supérieure de la partie principale de boîtier (100) et le module de batterie (M) afin d'assurer leur assemblage;
une partie de sous-ensemble (300) dont une surface est en contact avec la face inférieure de la partie de boîtier principale (100) et est empilée sur celle-ci; et
une partie de fixation (400) reliant et fixant entre eux la partie principale de boîtier (100), la partie de support interne (200) et la partie de sous-ensemble (300),
dans lequel l'élément de fixation (400) comprend à la fois un joint soudé (410) réalisé par soudage et un joint collé (420) réalisé à l'aide d'un adhésif, **caractérisé en ce que**
la partie principale de boîtier (100), la partie de support interne (200) et la partie de sous-ensemble (300) sont assemblées les unes aux autres en partageant une certaine zone de jonction,
dans lequel la partie principale de boîtier (100) et la partie de support interne (200) comportent chacune des trous de soudure à des emplacements correspondants,
le joint soudé (410) est formé en faisant passer simultanément la partie principale de boîtier (100) et la partie de support interne (200) à travers les trous de soudure, et
le joint collé (420) est réalisé en assemblant par collage la partie principale de boîtier (100) à la partie de sous-ensemble (300), par application de la colle entre les deux de manière à recouvrir la position d'au moins l'un des trous de soudure.

2. Boîtier (1000) selon la revendication 1, dans lequel
la partie de sous-ensemble (300) comporte une partie de stockage gravée dans celle-ci et dans laquelle l'adhésif est logé.

3. Boîtier (1000) selon la revendication 2, dans lequel la partie de stockage d'adhésif comprend une première rainure de stockage d'adhésif (311) qui est un gradin ménagé à une certaine profondeur dans une zone de stockage d'adhésif prédéterminée, comprenant une zone recouvrant une position des trous de soudure.

4. Boîtier (1000) selon la revendication 2 ou 3, dans lequel la partie de stockage d'adhésif comprend une deuxième rainure de stockage d'adhésif (312) comportant des évidements formés à intervalles réguliers dans une zone de stockage d'adhésif prédéterminée, comprenant une zone recouvrant une position des trous de soudure.

5. Boîtier (1000) selon l'une quelconque des revendications 2 à 4, dans lequel, lorsque la direction de formation du trou de soudure et les surfaces de contact de la partie principale de boîtier (100) et de la partie de support interne (200) ne sont ni perpendiculaires ni parallèles l'une à l'autre et présentent entre elles une inclinaison prédéterminée,
la partie de stockage d'adhésif comprend une troisième rainure de stockage d'adhésif (313) gravée par paliers dans une région de stockage d'adhésif prédéterminée, comprenant une zone qui recouvre une position des trous de soudure.

6. Boîtier (1000) selon l'une quelconque des revendications 2 à 5, dans lequel, lorsque la densité du joint soudé (410) est inférieure à une valeur de référence prédéterminée, le joint collé (420) est recouvert d'une quantité d'adhésif supérieure à la quantité maximale d'adhésif contenue dans la partie de stockage d'adhésif, y compris une zone chevauchant une position des trous de soudage.

7. Boîtier selon l'une quelconque des revendications 1 à 6, dans lequel la partie de sous-ensemble (300) comprend en outre une partie de revêtement (314) comportant un matériau de revêtement sur une surface extérieure de la partie de sous-ensemble (300).

8. Procédé de fabrication d'un boîtier inférieur étanche à l'eau pour batterie, dans lequel une partie de support interne est disposée sur une surface supérieure d'une partie principale de boîtier, et une partie de sous-ensemble est disposée sur une surface inférieure de la partie principale de boîtier, le procédé comprenant:
une étape (a) consistant à souder entre elles la partie principale de boîtier et la partie de support interne au moyen d'un joint soudé;
une étape (b) consistant à assembler la partie principale de boîtier et la partie de sous-ensemble l'une à l'autre au moyen d'un joint collé; et
une étape (c) consistant à assembler par pression la partie principale de boîtier, la partie de support interne et la partie de sous-ensemble,
dans lequel la partie principale de boîtier, la partie de support interne et la partie de sous-ensemble sont assemblées les unes aux autres en partageant une certaine zone de jonction,
dans lequel la partie principale de boîtier et la partie interne du support comportent chacune des trous de soudure à des emplacements correspondants,
le joint soudé est formé en faisant passer simultanément la partie principale de boîtier et la partie de support interne à travers les trous de soudure,
le joint collé est formé par assemblage collé de la partie principale de boîtier et la partie de sous-ensemble, par application de la colle entre celles-ci de manière à recouvrir au moins l'un des trous de soudure.

9. Procédé selon la revendication 8, dans lequel l'étape (b) comprend une étape (b1) consistant à contrôler la densité d'un joint soudé entre la partie principale de boîtier et la partie de support interne, et
l'étape (b) comprend en outre une étape (b2) consistant à appliquer une quantité d'adhésif supérieure à la quantité maximale pouvant être contenue dans la partie de stockage d'adhésif de la partie de sous-ensemble lorsque la densité du joint soudé à l'étape (b1) est inférieure à une valeur de référence prédéterminée.

10. Procédé selon la revendication 8 ou 9, comprenant en outre, à la suite de l'étape (b), une étape (e) consistant à superposer une partie de revêtement comprenant un matériau de revêtement sur une surface extérieure de la partie de sous-ensemble.
